# EUROPÄISCHE PATENTSCHRIFT

(11) **EP 3 762 253 B1**
(45) Veröffentlichungstag und Bekanntmachung des Hinweises auf die Patenterteilung: **02.11.2022**
(21) Anmeldenummer: 19709437.8
(22) Anmeldetag: 04.03.2019
(51) Int. Cl.: B60N 2/28, B60R 7/04

(54) **HALTEVORRICHTUNG FÜR EINE LAST AUF EINEM FAHRZEUGSITZ**
HOLDING DEVICE FOR A LOAD ON A VEHICLE SEAT
DISPOSITIF DE MAINTIEN POUR UNE CHARGE SUR UN SIÈGE DE VÉHICULE

(30) Priorität: 09.03.2018 DE 102018105535
(43) Veröffentlichungstag der Anmeldung: 13.01.2021
(73) Patentinhaber: Herberger, Thomas, 91094 Langensendelbach (DE)
(72) Erfinder: Herberger, Thomas, 91094 Langensendelbach (DE)
(74) Vertreter: Schlögl, Markus
(86) Internationale Anmeldenummer: PCT/EP2019/055346
(87) Internationale Veröffentlichungsnummer: WO 2019/170618

(56) Entgegenhaltungen:
- DE-A1-102006 023 948
- DE-U1-202015 100 327
- GB-A- 2 524 309
- US-A1- 2005 253 431

## Beschreibung

Die Erfindung betrifft eine Haltevorrichtung für eine Last auf einem Fahrzeugsitz, insbesondere betrifft die Erfindung eine Halterung zur Befestigung mittels Isofix.

Aus dem Stand der Technik ist eine Haltevorrichtung für Messgeräte bekannt, welche mittels Isofix befestigt wird. Die bekannte Halterung weist zwei Befestigungsvorrichtungen auf, an denen ein erstes Bügelelement befestigt ist, welches zur Abstützung gegen eine Lehne des Sitzes geeignet ist. Mit dem Bügelelement ist ein Tragelement schwenkbar verbunden. Der Winkel zwischen Bügelelement und Klemmelement kann mittels zweier Klemmen fixiert werden. Eine ausreichende Fixierung des Winkels ist von der aufgewendeten Kraft des Nutzers abhängig. Auf einer gegenüberliegenden Seite des Tragelements ist ein Stützelement auf einer zum Sitzkissen gerichteten Seite angeordnet, so dass das Tragelement im eingebauten Zustand mit dem Stützelement auf dem Sitzkissen des Fahrzeugsitzes aufliegt. Das Tragelement ist mit einem weiteren Bügelelement verbunden, welches auf einer dem Bügelelement gegenüberliegenden Seite angeordnet ist und mit dem Tragelement schwenkbar verbunden ist. Ein Winkel zwischen zweitem Bügelelement und Tragelement kann mittels zweier Klemmen fixiert werden. Das zweite Bügelelement dient dazu, die Haltevorrichtung gegen eine Vorderseite des Fahrzeugsitzes zu klemmen. Die bekannte Haltevorrichtung bietet nur einen eingeschränkten Bedienkomfort.

Bei einer weiteren bekannten Haltevorrichtung sind sowohl die Befestigungsvorrichtungen als auch das Bügelelement schwenkbar mit dem Tragelement verbunden.

Bei weiteren bekannten Haltevorrichtungen kann auch die Last dazu verwendet werden, ein Verkippen der Haltevorrichtung um eine Horizontalachse zu beschränken. Dieses schränkt das Einsatzgebiet der Haltevorrichtung ein, da nur Lasten einer vorgegebenen Geometrie geeignet sind, auf dieser Haltevorrichtung befestigt zu werden. Alternativ können manche Haltevorrichtungen zusätzlich durch Gurte, z.B. den Sicherheitsgurt befestigt werden. Auch diese Haltevorrichtungen bieten nur einen eingeschränkten Bedienkomfort.

Die US 2005/0253431 A1 betrifft ein Kinderrückhaltesystem. Das Dokument offenbart Haltevorrichtung für eine Last auf einem Fahrzeugsitz umfassend
- ein Auflageelement zum Fixieren einer Last,
- ein Stützelement, welches mit dem Auflageelement schwenkbar verbunden ist,
- zumindest eine Befestigungsvorrichtung zum Eingreifen in einen Haltebügel, welche mit dem Stützelement verbunden ist, und
- ein Stellelement,
wobei das Stellelement geeignet ist, einen Winkel α so zwischen dem Stützelement und dem Auflageelement einzustellen, dass im eingebauten Zustand das Auflageelement gegen eine Sitzfläche und das Stützelement gegen eine Sitzlehne des Fahrzeugsitzes spreizbar sind und ein Verdrehen der Haltevorrichtung um eine Horizontalachse verhindert wird.

Die DE 20 2015 100 327 U1 betrifft eine Aufnahmevorrichtung zur Anordnung in einem Kraftfahrzeug. Das Dokument offenbart eine klemmende Fixierung eines Winkels zwischen einem Auflageelement und einem Stützelement. Die D2 gibt keinen Hinweis, dass das Stellelement ausschließlich eine Verringerung des Winkels α beschränkt, und somit im ausgebauten Zustand der Haltevorrichtung das Stützelement vom Auflageelement wegschwenkbar ist, ohne das Stellelement zu verändern.

Die GB 2524309 A betrifft einen Kindersitz mit einer Basis. Die Basis weist ein Stützelement auf.

Die DE 10 2006 023 948 A1 betrifft ein Transportbehältersicherungssystem. Das Sicherungssystem weist ein Auflageelement und eine damit schwenkbar verbundene Befestigungsvorrichtung zum Eingreifen in einen Haltebügel auf. Die bekannten Haltevorrichtungen sind kompliziert in der Handhabung und weisen nur einen geringen Widerstand gegen ein Verkippen um eine Horizontalachse in einem eingebauten Zustand auf.

Aufgabe der Erfindung ist es, die Nachteile nach dem Stand der Technik zu beseitigen. Insbesondere soll eine einfache Haltevorrichtung angegeben werden, die einen großen Widerstand gegen eine Vertikalbewegung der Haltevorrichtung aufweist und komfortabel zu bedienen ist.

Die Aufgabe der Erfindung wird durch den Gegenstand des Anspruch 1 gelöst. Zweckmäßige Ausgestaltungen ergeben sich aus den abhängigen Ansprüchen.

Die erfindungsgemäße Haltevorrichtung für eine Last auf einem Fahrzeugsitz umfasst
- ein Auflageelement zum Fixieren einer Last,
- ein Stützelement, welches mit dem Auflageelement schwenkbar verbunden ist,
- zumindest eine Befestigungsvorrichtung zum Eingreifen in einen Haltebügel, welche mit dem Stützelement und/oder dem Auflageelement verbunden ist, und
- ein Stellelement,
wobei das Stellelement geeignet ist, einen Winkel α so zwischen dem Stützelement und dem Auflageelement einzustellen, dass im eingebauten Zustand das Auflageelement gegen eine Sitzfläche und das Stützelement gegen eine Sitzlehne des Fahrzeugsitzes spreizbar sind und ein Verdrehen der Haltevorrichtung um eine Horizontalachse und/oder eine Bewegung senkrecht zur Sitzfläche verhindert wird.

Das Auflageelement ist dafür vorgesehen, mit einer Auflageseite auf einer Sitzfläche eines Fahrzeugsitzes zumindest teilweise aufzuliegen und auf einer der Auflageseite gegenüberliegenden Lastaufnahmeseite eine Last zu fixieren. Das Auflageelement kann ein flächiges Element sein. Das Stützelement ist dafür vorgesehen, die Haltevorrichtung mit einer Stützseite gegen eine Sitzlehne des Fahrzeugsitzes abzustützen. Auflageelement und Stützelement sind schwenkbar miteinander verbunden, wobei eine Schwenkachse ausgebildet ist. Die Schwenkachse ist zweckmäßigerweise im eingebauten Zustand der Haltevorrichtung eine Horizontalachse.

Mit dem Auflageelement und/oder dem Stützelement ist eine Befestigungsvorrichtung starr oder schwenkbar verbunden. Das Befestigungselement umfasst zweckmäßigerweise eine Klammer und/oder ein Rastelement. Das Befestigungselement ist so angeordnet, dass es zum Eingreifen in einen Haltebügel der am Fahrzeugsitz, insbesondere im Bereich der Stoßkante zwischen Sitzfläche und Sitzlehne, angeordnet ist, geeignet ist. Zweckmäßigerweise ist somit das Befestigungselement an der Schwenkachse, in einer sich vom Auflageelement zur Schwenkachse erstreckenden Richtung mit dem Auflageelement verbunden oder in einer sich vom Stützelement zur Schwenkachse erstreckenden zweiten Richtung mit dem Stützelement verbunden. In einer Ausgestaltung, in der die Haltevorrichtung nur eine Befestigungsvorrichtung umfasst, sind zweckmäßigerweise auf beiden Seiten der Befestigungsvorrichtung Stützmittel zum Abstützen der Befestigungsvorrichtung gegen ein Verdrehen der Haltevorrichtung um eine Vertikalachse vorgesehen. In einer Ausgestaltung mit mehr als einer Befestigungsvorrichtung sind die Stützmittel entbehrlich.

Das Stellelement ist dazu geeignet, Stützelement und Auflageelement um die Schwenkachse zu verschwenken und so einen Winkel α einzustellen. Der Winkel α ist insbesondere ein minimaler Winkel. Der Winkel α ist zwischen der Lastaufnahmeseite des Auflageelements und einer der Stützseite gegenüberliegenden Innenseite des Stützelements definiert. Der Winkel α ist im eingebauten Zustand der Haltevorrichtung gleich oder größer einem Winkel β, der zwischen Sitzfläche und Sitzlehne des Fahrzeugsitzes definiert ist. Das Stellelement ist insbesondere so ausgelegt, dass der Winkel α mit geringem Kraftaufwand eingestellt werden kann und somit die Funktion der Haltevorrichtung unabhängig von einer aufgebrachten Klemmkraft ist.

Der Vorteil der erfindungsgemäßen Haltevorrichtung ist, dass die Haltevorrichtung auch gegen Drehbewegungen um eine horizontale Achse bzw. gegen vertikale Bewegungen gesichert ist. Die Haltevorrichtung ist einfach aufgebaut und bietet einen guten Bedienkomfort.

In einem nicht-eingebauten Zustand kann das Stützelement von dem Auflageelement weg geschwenkt werden, so dass die Haltevorrichtung platzsparend verstaut werden kann. Gemäß der Erfindung ist die Haltevorrichtung so ausgestaltet, dass das Stellelement ausschließlich eine Verringerung des Winkels α beschränkt, und somit im ausgebauten Zustand der Haltevorrichtung das Stützelement vom Auflageelement weggeschwenkt werden kann, ohne das Stellelement zu verändern. Das Auflageelement und/oder Stützelement können auf einer von der Schwenkachse abgewandten Seite einen Griff aufweisen, um die Haltevorrichtung alleine oder mit der Last zu tragen.

In Ausgestaltung ist der Haltebügel ein fahrzeugseitiger Isofix-Bügel und die Befestigungsvorrichtung eine Isofix-Rastvorrichtung. Isofix ist ein bekanntes Befestigungssystem für Kindersitze in Automobilen und ist nach der Norm ISO 13216 standardisiert. Bei dem fahrzeugseitigen Isofix Bügel kann es sich sowohl um einen originär mit dem Fahrzeugsitz verbundene Isofix-Bügel handeln als auch um einen Nachrüstsatz, der insbesondere lösbar mit dem Fahrzeugsitz verbunden ist.

Zweckmäßigerweise umfasst die Haltevorrichtung genau zwei Befestigungsvorrichtungen, insbesondere Isofix-Rastvorrichtungen.

In einer Ausgestaltung umfasst das Auflageelement zwei Arme mit jeweils einem ersten und einem zweiten Ende, welche vorzugsweise jeweils an einem ersten Ende eine Befestigungsvorrichtung zum Eingreifen in einen Haltebügel aufweisen, und ein mit beiden Armen im Bereich der zweiten Enden verbundenes Tragelement.

Die beiden Arme erstrecken sich im Wesentlichen parallel zueinander. An einem ersten Ende weisen beide Arme ein Befestigungselement auf. Die Arme sind im Bereich des Befestigungselements so voneinander beabstandet, dass sie in den fahrzeugseitig vorgesehenen Haltebügel eingreifen können. Die Arme sind zweckmäßigerweise weiterhin geeignet, als Auflage auf einem Sitzkissen des Fahrzeugsitzes zu dienen. Insbesondere liegen die Arme im Bereich der zweiten Enden zumindest teilweise im eingebauten Zustand auf dem Sitzkissen des Fahrzeugsitzes auf.

Der Abstand der beiden Arme voneinander wird durch ein Verbindungselement sowie das Tragelement fixiert. Zweckmäßigerweise sind die Arme linear ausgestaltet und verlaufen parallel zueinander.

Das Tragelement weist insbesondere eine Aufnahme für eine Last und/oder eine Auflagefläche zum Anordnen einer Last, beispielsweise einem Messgerät, auf. Diese Auflagefläche auf der Lastaufnahmeseite kann einen fixen oder einstellbaren Winkel γ zur Erstreckungsrichtung der Arme d.h. der Auflageseite des Auflageelements bilden.

Mit dem Tragelement ist ein Bügel z.B. in Form eines U-Bügels verbunden, welcher mit den Armen einen Winkel bildet. Insbesondere kann ein minimaler Winkel, z.B. 90° eingestellt werden. Das Verbindungselement ist insbesondere zwischen dem Tragelement und den Befestigungselementen angeordnet.

In einer Ausgestaltung weisen die Arme jeweils ein Lager auf, um das Verbindungselement drehbar zu lagern. Ein solches Lager ist zweckmäßigerweise auf sich gegenüberliegenden Seiten der Arme in einem gleichen Abstand zu den ersten Enden angeordnet. Es kann sich z.B. um ein Sackloch oder Durchgangsloch zur Aufnahme eines zylinderförmigen Abschnittes des Verbindungselements handeln.

Zweckmäßigerweise weist das Verbindungselement weiterhin einen Vorsprung auf, welcher durch Druck durch das Stellelement auf einen gewünschten Winkel α eingestellt werden kann. Vorzugsweise ist das Stellelement eine Gewindespindel. Eine entsprechende Gewindemutter ist zweckmäßigerweise mit dem Auflageelement verbunden. Eine solche Gewindespindel kann in einer einfachen Ausführung manuell durch eine Schraubbewegung betätigt werden. Alternativ kann es sich aber auch um eine motorisiert angetriebene Spindel handeln. Weiter alternativ kann es sich bei dem Stellelement aber beispielsweise auch um einen Klinkentrieb oder Raststange handeln.

Das Stellelement kann ein Bedienelement aufweisen, welches auf einer einer Schwenkachse A zwischen Stützelement und Auflageelement abgewandten Seite des Auflageelements angeordnet ist.

Bei dem Bedienelement kann es sich insbesondere um eine Flügelmutter, eine Rändelmutter, einen Zylindergriff, einen Kreuzgriff oder einen Sterngriff handeln. In dieser Ausführungsform ist das Stellelement zweckmäßigerweise in einer Führung unter dem Tragelement durchgeführt. Die Führung kann auch die Funktion eines Berührschutzes übernehmen.

In einer weiteren Ausgestaltung ist das Tragelement, aus einem abgekanteten oder umgeformten Blech hergestellt oder aus zumindest zwei Querholmen gebildet. Zweckmäßigerweise weist das Auflageelement, insbesondere das Tragelement, Befestigungselemente und/oder Durchgangslöcher und/oder Nuten auf. Die Querholme können Nuten aufweisen, insbesondere können sie aus Strebenprofilen gebildet sein. Dabei kann es sich beispielsweise auch um Möglichkeiten zu einer Gurtdurchführung oder zur Befestigung weiterer Rastmittel handeln.

In Ausgestaltung sind die Arme und/oder das Verbindungselement aus einem Vierkantprofil hergestellt.

Der Bügel weist in einer Ausgestaltung eine U-Form oder V-Form auf. Alternativ oder zusätzlich kann das Stützelement ein plattenförmiges Element umfassen. Z.B. kann eine Öffnung des Bügels zumindest teilweise mit einem plattenförmigen Element geschlossen sein. Die Form des Bügels kann an eine Form der Sitzlehne des Fahrzeuges angepasst sein, um einen breiten Stützbereich aufzuweisen. Ein breiter Stützbereich erhöht zum einen einen Widerstand gegen Bewegungen mit einer Vertikalkomponente, zum anderen wird ein Bezug einer Rückenlehne des Fahrzeuges geschont. Ein Verschluss des Bügels mit einem plattenförmigen Element kann ebenfalls zum Schonen eines Bezugs einer Rückenlehne des Fahrzeuges dienen.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen jeweils in einer schematischen Prinzipskizze:
Fig. 1: schematische Darstellung der Haltevorrichtung in einer ersten Ausgestaltung
Fig. 2: perspektivische Ansicht der Haltevorrichtung in einer zweiten Ausgestaltung
Fig. 3: Seitenansicht der Haltevorrichtung nach der zweiten Ausgestaltung,
Fig. 4: Draufsicht der Haltevorrichtung nach der zweiten Ausgestaltung,
Fig. 5: Unteransicht der Haltevorrichtung nach der zweiten Ausgestaltung,
Fig. 6: Prinzipskizze der Montage einer Haltevorrichtung auf einem Fahrzeugsitz,
Fig. 7: perspektivische Ansicht der Haltevorrichtung in einer dritten Ausgestaltung, und
Fig. 8: Seitenansicht der Haltevorrichtung nach der dritten Ausgestaltung.

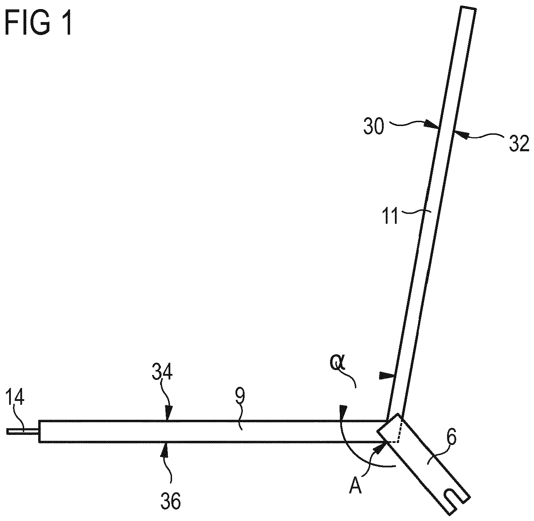

Fig. 1 zeigt eine schematische Ansicht der erfindungsgemäßen Haltevorrichtung 2 in einer ersten Ausgestaltung. Die Haltevorrichtung 2 umfasst ein Auflageelement 9, ein Stützelement 11, ein Befestigungselement 6 und ein Stellelement 14. Das Auflageelement 9 und das Stützelement 11 sind um eine Schwenkachse A schwenkbar. Auflageelement 9 und Stützelement 11 können als plattenförmige Elemente ausgestaltet sein. Die Schwenkachse A ist im eingebauten Zustand horizontal. Zwischen einer Lastaufnahmeseite 34 des Auflageelements 9, die im eingebauten Zustand von der Sitzfläche des Fahrzeugsitzes weg gerichtet ist, zu einer Innenseite 30 des Stützelements 11, die im eingebauten Zustand von der Sitzlehne des Fahrzeuges weggerichtet ist, ist der Winkel α definiert. Im eingebauten Zustand liegt das Auflageelement 9 zumindest teilweise mit der Auflageseite 36 auf der Sitzfläche des Fahrzeugsitzes auf, eine Stützfläche 32 des Stützelements 11 ist zumindest teilweise gegen eine Sitzlehne des Fahrzeugsitzes abgestützt. In der gezeigten Ausgestaltung ist das Befestigungselement 6 im Bereich der Schwenkachse von Stützelement 11 und Auflageelement 9 mit zumindest einem der beiden Elemente fest oder schwenkbar verbunden. Zur Verhinderung eines Verkippens der Haltevorrichtung um eine vertikale Achse im eingebauten Zustand sind nicht dargestellte Stützmittel vorgesehen.

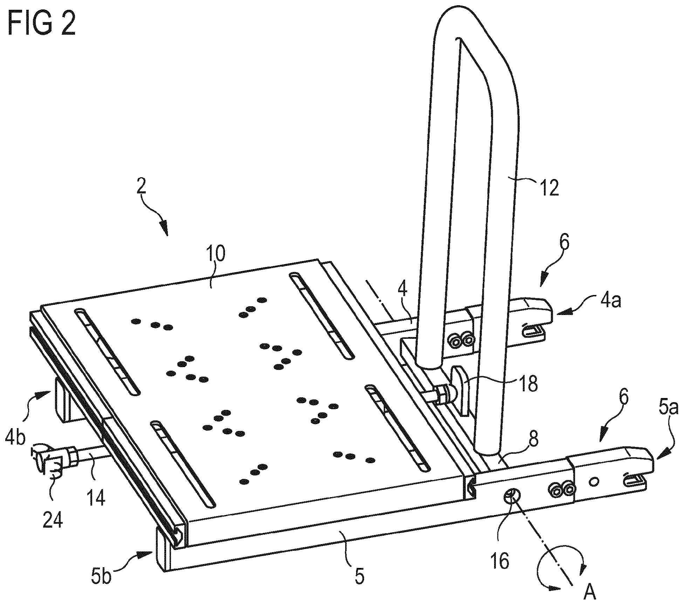

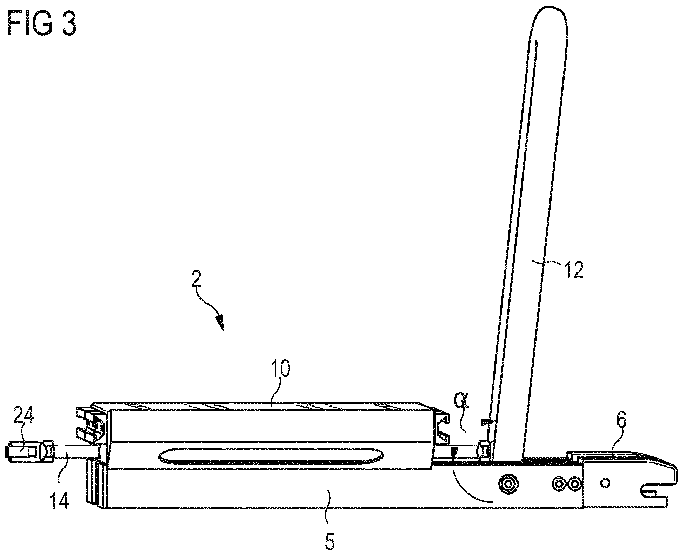

Fig. 2 bis 5 zeigen Ansichten einer erfindungsgemäßen Haltevorrichtung 2 in einer zweiten Ausgestaltung. Die Haltevorrichtung 2 umfasst zwei Arme 4, 5, welche sich parallel zueinander erstrecken. Die Arme 4, 5 weisen jeweils ein erstes Ende 4a, 5a und ein zweites Ende 4b, 5b auf. Am ersten Ende 4a, 5a ist an jedem der Arme 4, 5 ein Befestigungselement 6 angeordnet. Das Befestigungselement 6 ist hier eine Isofix-Rastvorrichtung. Zur Betätigung der Isofix-Rastvorrichtung kann ein hier nicht dargestelltes Auslösemittel 26 vorhanden sein. Das Befestigungselement 6 ist starr mit dem Arm 4 bzw. dem Arm 5 verbunden. Die Arme 4 und 5 sind als Vierkantprofil ausgebildet. Jeder der Arme 4, 5 weist ein Lager 16 auf, in welches jeweils ein Ende eines Verbindungselements 8 eingreift. Das Lager 16 und somit auch das Verbindungselement 8 ist im Bereich der ersten Enden 4a, 5a der Arme 4, 5 angeordnet. Das Verbindungselement 8 kann -wie hier dargestellt- ein Vierkantprofil mit zylindrischen Endbereichen sein. Auf dem Verbindungselement 8 ist ein Bügel 12 angeordnet. Der Bügel 12 erstreckt sich U-förmig von dem Verbindungselement 8 und ist hier als Rundrohr ausgeführt. Wie aus Fig. 3 ersichtlich, erstrecken sich die Arme 4, 5 und der Bügel 12 in einem Winkel α zueinander. Der Winkel α kann durch ein Stellelement 14 eingestellt werden.

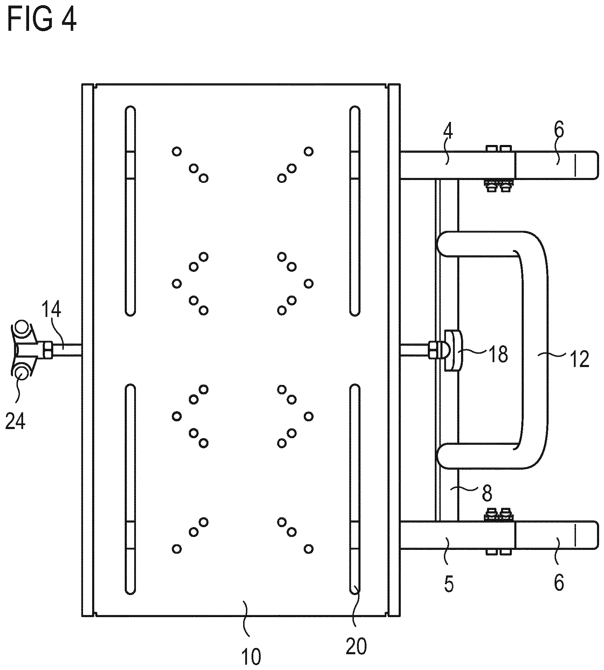

Auf den Armen 4, 5 ist ein Tragelement 10 angeordnet. Das Tragelement 10 erstreckt sich von den zweiten Enden der Arme 4b, 5b zum Verbindungselement und ist mit den Armen 4, 5 fest verbunden. Das Tragelement 10 kann, wie in Fig. 4 gezeigt, Durchgangslöcher 20 aufweisen. Auf dem Tragelement 10 kann eine Last befestigt werden. Das Tragelement 10 hat im eingebauten Zustand auf der Lastaufnahmeseite 34 vorzugsweise eine horizontale Oberfläche.

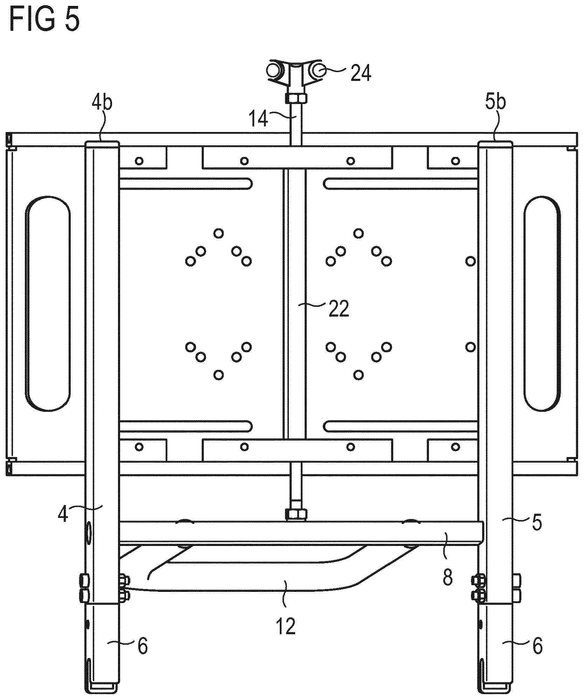

Unter dem Tragelement 10 ist ein Stellelement 14 in der gezeigten Ausführung so angeordnet, dass ein Bedienelement 24 zwischen den zweiten Enden der Arme 4b, 5b angeordnet ist und das Stellelement 14 durch ein Führungselement 22, welches in Fig. 5 dargestellt ist, geführt wird. Das Führungselement 22 umfasst zweckmäßigerweise ein Gewinde, so dass ein als Gewindespindel ausgeführtes Stellelement 14 in seiner Längsposition verstellt werden kann. Das Stellelement 14 erstreckt sich bis zu einem Vorsprung 18, der auf dem Verbindungselement 8 angeordnet ist. Vorsprung 18 und Bügel 12 sind vorzugsweise in einer Ebene angeordnet und erstrecken sich im Wesentlichen in die gleiche Richtung vom Verbindungselement 8 weg.

Durch Drehen des als Gewindespindel ausgeführten Stellelements 14 wird ein Druck auf den Vorsprung 18 ausgeübt und der Winkel α (minimale Winkel o) des Bügels wird eingestellt.

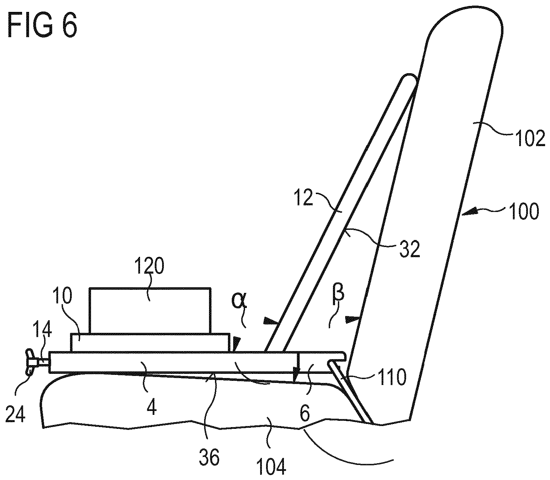

Fig. 6 zeigt schematisch den Einbau der erfindungsgemäßen Haltevorrichtung 2 auf einem Fahrzeugsitz 100 mit einer Rückenlehne 102 und einem Sitzkissen 104. Im Stoßbereich zwischen Sitzkissen 104 und Rückenlehne 102 sind typischerweise Isofix-Bügel 110 als fahrzeugseitige Haltebügel angeordnet. Die Haltevorrichtung 2 wird mit der Befestigungsvorrichtung 6, insbesondere den Isofix-Rastvorrichtungen, mit den Isofix-Bügeln 110 eines Sitzes verrastet. Die Arme 4, 5 der Haltevorrichtung 2 liegen im eingebauten Zustand zumindest im Bereich der zweiten Enden 4b, 5b der Arme 4, 5, d.h. mit der Auflageseite 36 des Auflageelements 9 auf dem Sitzkissen auf. Eine vollflächige Auflage bzw. das Unterlegen eines Keilkissens sind in Ausgestaltungen möglich. Der Bügel 12 wird als Stützelement 11 mittels dem Bedienelement 24 des Stellelements 14 in einem solchen Winkel α zu den Armen ausgerichtet, dass der Bügel 12 und die Arme 4, 5 so gegen Sitzlehne 102 und Sitzkissen 104 gespreizt wird, dass eine Drehung der Haltevorrichtung und/oder eine Bewegung mit einer horizontalen Komponente verhindert wird. In der dargestellten Ausgestaltung ist der Winkel α größer als ein Winkel β zwischen der Sitzfläche 104 und der Sitzlehne 102.

Eine auf der Haltevorrichtung 2 fixierte Last 120, z.B. ein Messgerät, kann durch die Haltevorrichtung 2 sicher in Position gehalten werden. Die erfindungsgemäße Haltevorrichtung 2 ist einfach zu bedienen.

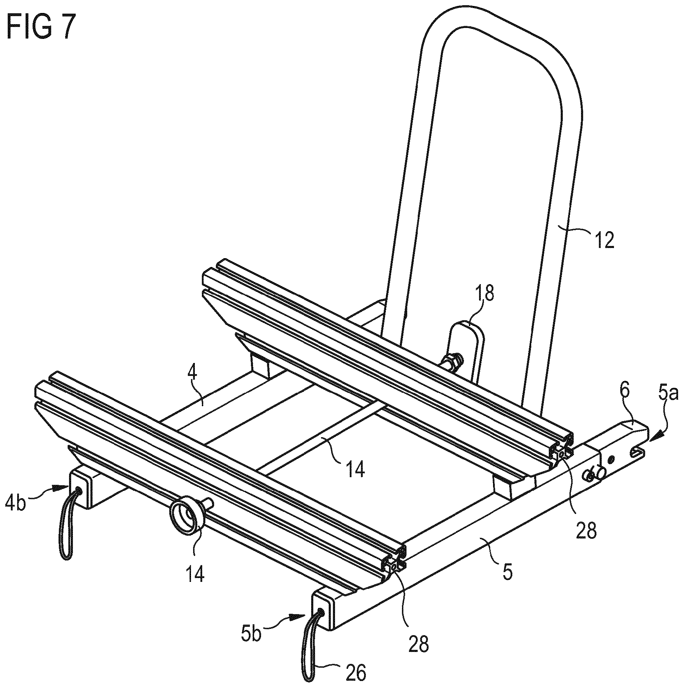

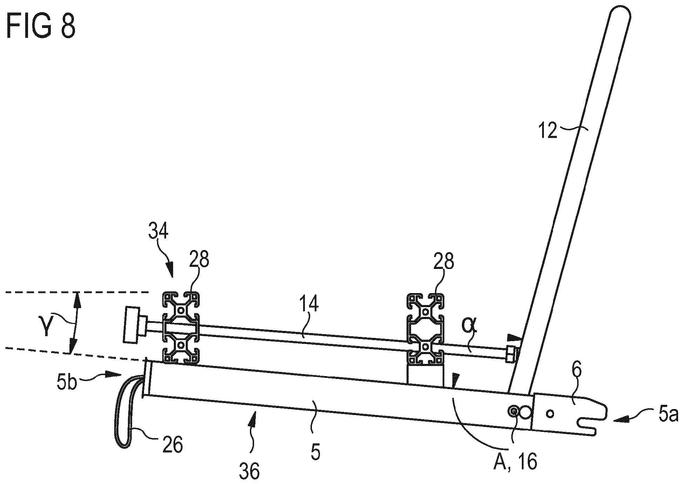

Fig. 7 und 8 zeigen eine dritte Ausgestaltung der Haltevorrichtung 2. Die dritte Ausgestaltung ähnelt der zweiten Ausgestaltung, so dass hier die Abweichungen in Bezug auf die Fig. 7 und 8 erläutert werden. In dieser dritten Ausgestaltung ist das Auflageelement 9 durch zwei Arme 4, 5 und zwei senkrecht zu den Armen 4, 5 verlaufende Querholme 28 gebildet. Die Querholme 28 sind hier zum Beispiel durch ein Streben-Profil mit außenliegenden Nuten gebildet. Die Querholme 28 weisen eine Lastaufnahmeseite 34 auf, die in einem Winkel γ zur Erstreckungsrichtung der Arme 4, 5, bzw. der Auflageseite 36 verlaufen. Der Winkel γ ist im gezeigten Beispiel etwa 5°. Um ein Abstellen einer nicht montierten Haltevorrichtung 2 zu erleichtern, können im Bereich des Bügels 12 Füße vorgesehen sein, so dass die Haltevorrichtung 2, wenn der Bügel 12 von dem Auflageelement 9 weggeklappt ist, entlang der Oberseite der Querholme 28 auch eine horizontale Auflagefläche bereitstellt.

Das Stellelement 14 ist mit einer Rändelmutter als Bedienelement 24 versehen. Das Stellelement 14 ist durch Durchbrüche in den Querholmen 28 geführt. Die Befestigungsvorrichtungen 6, insbesondere Isofix-Rastvorrichtungen, sind an den ersten Enden der Arme 4a, 5a befestigt, wobei jeweils die Bohrung für die Befestigung der Befestigungsvorrichtung 6 an den Armen 4, 5 gleichzeitig als Lager 16 für das Verbindungselement 8 dient. Durch die Arme 4, 5 sind zum zweiten Ende der Arme 4b, 5b Auslösemittel 26, hier in Form von Schlaufen für die Befestigungsvorrichtungen geführt, so dass die Befestigungsvorrichtung 6 komfortabel vom fahrzeugseitigen Haltebügel gelöst werden kann.

### Bezugszeichen liste

- 2: Haltevorrichtung
- 4: Arm
- 4a: erstes Ende
- 4b: zweites Ende
- 5: Arm
- 5a: erstes Ende
- 5b: zweites Ende
- 6: Befestigungsvorrichtung
- 8: Verbindungselement
- 9: Auflageelement
- 10: Tragelement
- 11: Stützelement
- 12: Bügel
- 14: Stellelement
- 16: Lager
- 18: Vorsprung
- 20: Durchgangsloch
- 22: Führungselement

- 24: Bedienelement
- 26: Auslösemittel
- 28: Querholm
- 30: Innenseite
- 32: Stützseite
- 34: Lastaufnahmeseite
- 36: Auflageseite

- 100: Fahrzeugsitz
- 102: Sitzlehne
- 104: Sitzkissen
- 110: Isofix-Bügel

- 120: Last
- α: Winkel
- β: Winkel
- γ: Winkel
- A: Schwenkachse

## Patentansprüche

1. Haltevorrichtung (2) für eine Last (120) auf einem Fahrzeugsitz (100) umfassend
- ein Auflageelement (9) zum Fixieren einer Last (120),
- ein Stützelement (11), welches mit dem Auflageelement (9) schwenkbar verbunden ist,
- zumindest eine Befestigungsvorrichtung (6) zum Eingreifen in einen Haltebügel, welche mit dem Stützelement (11) und/oder dem Auflageelement (9) verbunden ist, und
- ein Stellelement (14),
wobei das Stellelement (14) geeignet ist, einen Winkel α so zwischen dem Stützelement (11) und dem Auflageelement (9) einzustellen, dass im eingebauten Zustand das Auflageelement (9) gegen eine Sitzfläche (104) und das Stützelement (11) gegen eine Sitzlehne (102) des Fahrzeugsitzes (100) spreizbar sind und ein Verdrehen der Haltevorrichtung (2) um eine Horizontalachse und/oder eine Bewegung senkrecht zur Sitzfläche (104) verhindert wird,
**dadurch gekennzeichnet,**
**dass** das Stellelement ausschließlich eine Verringerung des Winkels α beschränkt, und somit im ausgebauten Zustand der Haltevorrichtung das Stützelement vom Auflageelement wegschwenkbar ist, ohne das Stellelement zu verändern.

2. Haltevorrichtung (2) nach Anspruch 1, wobei die Befestigungsvorrichtung (6) eine Isofix-Rastvorrichtung ist, für einen fahrzeugseitigen Isofix-Bügel (110).

3. Haltevorrichtung (2) nach Anspruch 1 oder 2, wobei die Haltevorrichtung genau zwei Befestigungsvorrichtungen (6) umfasst.

4. Haltevorrichtung (2) nach Anspruch 3, wobei das Auflageelement (9) zwei Arme (4, 5) mit jeweils einem ersten (4a, 5a) und einem zweiten Ende (4b, 5b), welche vorzugsweise jeweils an dem ersten Ende (4a, 5a) eine Befestigungsvorrichtung (6) zum Eingreifen in den Haltebügel aufweisen, und ein mit beiden Armen (4, 5) im Bereich der zweiten Enden (4b, 5b) verbundenes Tragelement (10) umfasst.

5. Haltevorrichtung (2) nach Anspruch 4, wobei die Arme (4, 5) jeweils ein Lager (16) aufweisen, um das Stützelement (11) drehbar zu lagern.

6. Haltevorrichtung (2) nach einem der vorhergehenden Ansprüche, wobei das Stützelement (11) ein Verbindungselement (8) und einen Bügel (12), insbesondere einen U-förmigen oder V-förmigen Bügel, umfasst.

7. Haltevorrichtung (2) nach Anspruch 6, wobei das Verbindungselement (8) weiterhin einen Vorsprung (18) aufweist, welcher durch Druck durch das Stellelement (14) auf einen gewünschten Winkel α eingestellt werden kann.

8. Haltevorrichtung (2) nach einem der vorhergehenden Ansprüche, wobei das Stellelement (14) eine Gewindespindel ist.

9. Haltevorrichtung (2) nach einem der vorhergehenden Ansprüche, wobei das Stellelement (14) ein Bedienelement (24) aufweist, welches auf einer einer Schwenkachse A zwischen Stützelement (11) und Auflageelement (9) abgewandten Seite des Auflageelements (9) angeordnet ist.

10. Haltevorrichtung (2) nach einem der Ansprüche 4 bis 9, wobei das Tragelement (10) aus einem abgekanteten oder umgeformten Blech hergestellt ist oder aus zumindest zwei Querholmen (28), vorzugsweise hergestellt aus Strebenprofilen, gebildet ist.

11. Haltevorrichtung (2) nach einem der vorhergehenden Ansprüche, wobei das Auflageelement (9), insbesondere das Tragelement (10), zumindest ein Befestigungselement und/oder Durchgangslöcher (20) und/oder Nuten aufweist.

12. Haltevorrichtung (2) nach den Ansprüchen 4 und/oder 6, wobei die Arme (4, 5) und/oder das Verbindungselement (8) aus einem Vierkantprofil hergestellt sind.

13. Haltevorrichtung (2) nach einem der vorhergehenden Ansprüche, wobei das Stützelement (11) ein plattenförmiges Element umfasst.

## Claims

1. Holding device (2) for a load (120) on a vehicle seat (100) comprising
- a supporting element (9) for fixing a load (120),
- a support element (11) which is pivotably connected to the supporting element (9)
- at least one fastening device (6) for engaging in a retaining bracket, which is connected to the support element (11) and/or the supporting element (9), and
- an adjusting element (14),
said adjusting element (14) being adapted to adjust an angle α between the support element (11) and the supporting element (9) in such a way that, in the installed state, the supporting element (9) can be spread against a seat surface (104) and the support element (11) can be spread against a seat back (102) of the vehicle seat (100) and a rotation of the holding device (2) around a horizontal axis and/or a movement perpendicular to the seat surface (104) is prevented,
**characterised in that**
the adjusting element exclusively restricts a decrease of the angle a, and thus in the dismantled state of the holding device the support element can be pivoted away from the supporting element without changing the adjusting element.

2. Holding device (2) according to claim 1, wherein the fastening device (6) is an Isofix latching device for an Isofix bracket (110) on the vehicle side.

3. Holding device (2) according to claim 1 or 2, wherein the retaining device comprises exactly two fastening devices (6).

4. Holding device (2) according to claim 3, wherein the supporting element (9) comprises two arms (4, 5) each having a first end (4a, 5a) and a second end (4b, 5b), which preferably each have a fastening device (6) for engaging in the retaining bracket at the first end (4a, 5a), and a carrier element (10) connected to both arms (4, 5) in the region of the second ends (4b, 5b).

5. Holding device (2) according to claim 4, wherein the arms (4, 5) each comprise a bearing (16) for rotatably supporting the support element (11).

6. Holding device (2) according to any one of the preceding claims, wherein the support element (11) comprises a connecting element (8) and a bracket (12), in particular a U-shaped or V-shaped bracket.

7. Holding device (2) according to claim 6, wherein the connecting element (8) further comprises a protrusion (12), which can be adjusted to a desired angle α by pressure through the adjusting element (14).

8. Holding device (2) according to any one of the preceding claims, wherein the adjusting element (14) is a threaded spindle.

9. Holding device (2) according to one of the preceding claims, wherein the adjusting element (14) has an operating element (24) which is arranged on a side of the supporting element (9) facing away from a pivot axis A between the support element (11) and the supporting element (9).

10. Holding device (2) according to any one of claims 4 to 9, wherein the carrier element (10) is made of a folded or formed sheet metal or is formed of at least two transverse spars (28), preferably made of strut profiles.

11. Holding device (2) according to one of the preceding claims, wherein the supporting element (9), in particular the carrier element (10), comprises at least one fastening element and/or through holes (20) and/or grooves.

12. Holding device (2) according to claims 4 and/or 6, wherein the arms (4, 5) and/or the connecting element (8) are made of a square profile.

13. Holding device (2) according to any one of the preceding claims, wherein the support element (11) comprises a plate-shaped element.

## Revendications

1. Dispositif de retenue (2) pour une charge (120) sur un siège de véhicule (100) comprenant
- un élément d'appui (9) pour fixer une charge (120),
- un élément de support (11) qui est relié de manière pivotante à l'élément d'appui (9),
- au moins un dispositif de fixation (6) destiné à s'engager dans un étrier de retenue, qui est relié à l'élément de support (11) et/ou à l'élément d'appui (9), et
- un élément de réglage (14),
l'élément de réglage (14) étant apte à régler un angle α entre l'élément d'appui (11) et l'élément de support (9) de telle sorte que, à l'état monté, l'élément d'appui (9) puisse être écarté contre une surface d'assise (104) et l'élément de support (11) contre un dossier (102) du siège (100) du véhicule et qu'une rotation du dispositif de retenue (2) autour d'un axe horizontal et/ou un mouvement perpendiculaire à la surface du siège (104) est empêché,
**caractérisé en ce**
**que** l'élément de réglage limite exclusivement une réduction de l'angle a et que, par conséquent, à l'état démonté du dispositif de retenue, l'élément de support peut être éloigné de l'élément d'appui par pivotement sans modifier l'élément de réglage.

2. Dispositif de retenue (2) selon la revendication 1, dans lequel le dispositif de fixation (6) est un dispositif d'encliquetage Isofix pour un étrier Isofix (110) du côté du véhicule.

3. Dispositif de retenue (2) selon la revendication 1 ou 2, dans lequel le dispositif de retenue comprend exactement deux dispositifs de fixation (6).

4. Dispositif de retenue (2) selon la revendication 3, dans lequel l'élément d'appui (9) comporte deux bras (4, 5) ayant chacun une première (4a, 5a) et une deuxième extrémité (4b, 5b), qui présentent de préférence chacun à la première extrémité (4a, 5a) un dispositif de fixation (6) destiné à s'engager dans l'étrier de retenue, et un l'élément porteur (10) relié aux deux bras (4, 5) dans la zone des deuxièmes extrémités (4b, 5b).

5. Dispositif de retenue (2) selon la revendication 4, dans lequel les bras (4, 5) comportent chacun un palier (16) pour supporter en rotation l'élément de support (11).

6. Dispositif de retenue (2) selon l'une quelconque des revendications précédentes, dans lequel l'élément de support (11) comprend un élément de liaison (8) et un étrier (12), notamment un étrier en forme de U ou de V.

7. Dispositif de retenue (2) selon la revendication 6, dans lequel l'élément de liaison (8) présente en outre une saillie (18) qui peut être reglèe à un angle α souhaité par pression exercée par l'élément de réglage (14).

8. Dispositif de retenue (2) selon l'une des revendications précédentes, dans lequel l'élément de réglage (14) est une tige filetée.

9. Dispositif de retenue (2) selon l'une des revendications précédentes, dans lequel l'élément de réglage (14) présente un élément de commande (24) qui est disposé sur un côté de l'élément d'appui (9) opposé à un axe de pivotement A entre l'élément d'appui (11) et l'élément de support (9).

10. Dispositif de retenue (2) selon l'une quelconque des revendications 4 à 9, dans lequel l'élément porteur (10) est fabriqué à partir d'une tôle pliée ou déformée ou est formé d'au moins deux traverses (28), de préférence fabriquées à partir de profilés d'entretoise.

11. Dispositif de retenue (2) selon l'une des revendications précédentes, dans lequel l'élément d'appui (9), en particulier l'élément porteur (10), présente au moins un élément de fixation et/ou des trous traversants (20) et/ou des rainures.

12. Dispositif de retenue (2) selon les revendications 4 et/ou 6 dans lequel les bras (4, 5) et/ou l'élément de liaison (8) sont fabriqués à partir d'un profilé carré.

13. Dispositif de retenue (2) selon l'une des revendications précédentes, dans lequel l'élément de support (11) comprend un élément en forme de plaque.
